# EUROPEAN PATENT APPLICATION

(11) **EP 1 645 182 A1**
(43) Date of publication of application: **12.04.2006**
(21) Application number: 04024071.5
(22) Date of filing: 08.10.2004
(51) Int. Cl.: A01K 15/02, A01K 27/00

(54) **Useless barking preventing collar**

(71) Applicant: Pet Tech Japan Inc., Ayauta-gun, Kagawa 769-0206 (JP)
(72) Inventor: Inoue, Kazumi, Ayauta-gun Kagawa 769-0206 (JP)
(74) Representative: Emde, Eric

(57) **Abstract**

It is an object to provide a useless barking preventing collar for preventing a dog from barking. A collar (C) to be attached to the neck of a dog is provided with a vibration unit (10) for carrying out a vibration when sensing the bark of the dog, and the vibration unit (10) is constituted by a control portion (20) including a sound sensor (21) for detecting the bark of the dog, a regulator (22) for outputting a sense signal when the volume of the bark detected by the sound sensor (21) is equal to or greater than a reference, and a switch (23), a vibration generating portion (30) for generating a vibration when inputting the sense signal, and a sound generating portion (40) for generating a sound when inputting the sense signal. When the dog barks, accordingly, the vibration unit (10) is vibrated so that the collar (C) is vibrated. Consequently, the vibration of the collar (C) is transmitted to the dog so that an unpleasant feeling can be given to the dog. Thus, it is possible to prevent the dog from barking.

## Description

### Technical Field

The present invention relates to a useless barking preventing collar.

### Background Art

Conventionally, people have kept dogs to watch at home. The dog barks for threatening when a stranger enters the site of a house. Therefore, it is possible to prevent robbers from breaking into the house by keeping the dog.

However, many people recently keep dogs for pets in the rooms of apartments or the like. Only one wall is provided between neighbors in the apartment or the like. When the dog barks, his voice is loud and makes a noise. For this reason, there is a problem in that neighbors make a complaint.

In consideration of the circumstances, it is an object of the present invention to provide a useless barking preventing collar capable of preventing a dog from barking.

### Disclosure of Invention

A first feature of the present invention is directed to a useless barking preventing collar to be attached to a neck of a dog, comprising a vibration unit constituted by a control portion, a vibration generating portion connected to the control portion and a sound generating portion connected to the control portion, the control portion including a sound sensor for detecting a bark of the dog, a regulator for outputting a sense signal when a volume of the bark detected by the sound sensor is equal to or greater than a reference volume, and a switch provided between the regulator and the vibration generating portion and sound generating portion and serving to change over a transmitting destination for the sense signal output from the regulator between the vibration generating portion and the sound generating portion, the vibration generating portion serving to vibrate the vibration unit when inputting the sense signal, and the sound generating portion serving to generate a sound when inputting the sense signal.

A second feature of the present invention is directed to the useless barking preventing collar according to the first feature of the invention, wherein the regulator has a regulating mechanism for regulating a reference volume for outputting a sense signal.

According to the first feature of the present invention, when a dog barks, the regulator outputs a sense signal if the bark detected by the sound sensor is equal to or greater than the reference volume. In the case in which the regulator is connected to the vibration generating portion through the switch, the vibration unit is vibrated by the vibration generating portion. For this reason, if the collar is attached to the neck of the dog with the vibration generating portion connected to the regulator through the switch, the vibration unit senses the bark of the dog and is thus vibrated when the bark is equal to or greater than the reference volume. Consequently, the collar is also vibrated so that the vibration of the collar is transmitted to the dog. Thus, an unpleasant feeling can be given to the dog. Therefore, it is possible to prevent the dog from barking. In the case in which the switch is changed over to connect the regulator to the sound generating portion, moreover, the regulator outputs the sense signal to the sound generating portion and the sound generating portion generates a sound upon receipt of the sense signal when the greater bark than the reference volume is detected by the sound sensor. In other words, an owner can recognize the loudness of the bark at which the regulator outputs the sense signal, that is, the loudness of the bark at which the vibration generating portion is vibrated through the sound generated by the sound generating portion. By usually changing over the switch to connect the regulator to the vibration generating portion, the sound is not generated from the sound generating portion but the vibration generating portion only vibrates the collar when the dog barks. Thus, a noise is not made.

According to the second feature of the present invention, the reference volume for outputting the sense signal can be varied by the regulating mechanism. Therefore, an owner can regulate the reference volume corresponding to the form of a dog or an environment in which the dog is kept.

### Brief Description of Drawings

Fig. 1 is a schematic explanatory view showing a useless barking preventing collar 1 according to the present embodiment, and
Fig. 2 is a block diagram showing a control portion 20, a vibration generating portion 30 and a sound generating portion 40.

### Best Mode for carrying out the Invention

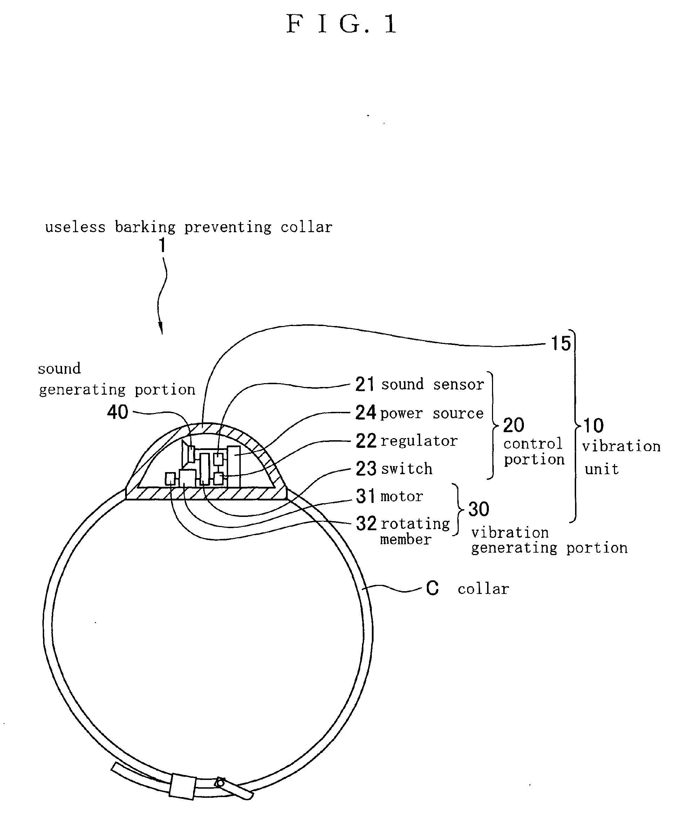

Next, an embodiment of the present invention will be described with reference to the drawings. Fig. 1 is a schematic explanatory view showing a useless barking preventing collar 1 according to the present embodiment. In Fig. 1, C denotes a collar to be attached to the neck of a dog. The useless barking preventing collar 1 according to the present embodiment is characterized in that a vibration unit 10 is provided on the collar C.

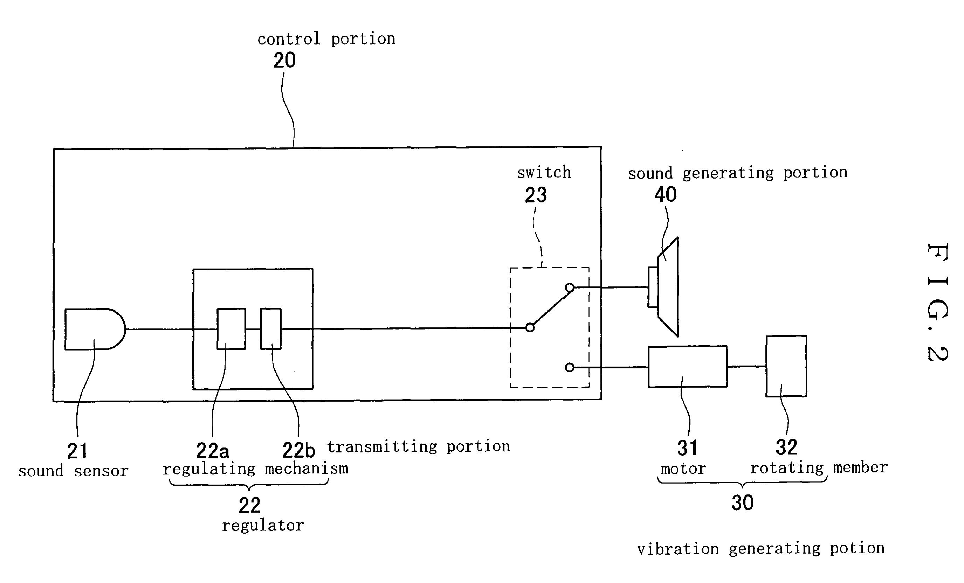

Fig. 2 is a block diagram showing a control portion 20, a vibration generating portion 30 and a sound generating portion 40 which constitute the vibration unit 10.

Next, the vibration unit 10 will be described.

As shown in Fig. 1, the vibration unit 10 is constituted by a case 15, the control portion 20, the vibration generating portion 30 and the sound generating portion 40.

The case 15 is attached to the proper place of the collar C, and has an inner part which can be externally sealed in a fluid-tightness.

The vibration generating portion 30 and the sound generating portion 40 are provided in connection to the control portion 20 respectively in the case 15 and each of them is connected to a power source 24 through an electric wire or the like. The power source 24 is a small-sized power source such as a battery and is not particularly restricted if it can supply a power to the control portion 20, the vibration generating portion 30 and the sound generating portion 40.

The control portion 20 will be described below in detail.

As shown in Figs. 1 and 2, the control portion 20 is constituted by a sound sensor 21, a regulator 22 and a switch 23.

The sound sensor 21 serves to detect the bark of a dog if any and to transmit an electric signal corresponding to the loudness of the bark thus detected, and is connected to the regulator 22.

The regulator 22 receives the electric signal transmitted from the sound sensor 21 and outputs a sense signal based on the electric signal when the bark detected by the sound sensor 21 is greater than a reference volume. The regulator 22 has a regulating mechanism 22a for regulating the reference volume for outputting the sense signal and a transmitting portion 22b for outputting the sense signal.

Therefore, the transmitting portion 22b can vary the reference volume for outputting the sense signal by means of the regulating mechanism 22a.

If the sound sensor 21 or the regulating mechanism 22a which has a function of outputting the sense signal is used, the transmitting portion 22b does not need to be provided.

The transmitting portion 22b of the regulator 22 in the control portion 20 is connected to both the vibration generating portion 30 and the sound generating portion 40 through the switch 23. The switch 23 serves to connect the regulator 22 to the vibration generating portion 30 or the sound generating portion 40, and can change over a destination for the sense signal transmitted from the transmitting portion 22b to the vibration generating portion 30 and/or the sound generating portion 40.

Next, the vibration generating portion 30 will be described.

The vibration generating portion 30 is constituted by a well-known motor 31, a rotating member 32 and a controller which is not shown.

The rotating member 32 such as a longitudinal bar member is attached to the main shaft of the motor 31 and the center of gravity of the rotating member 32 is eccentric with respect to the main shaft of the motor 31. The rotating member 32 is not restricted to the bar member but may be a disc, a cylinder or the like.

The controller serves to operate the motor when the sense signal is supplied from the transmitting portion 22b of the regulator 22 in the control portion 20.

The sound generating portion 40 will be described below.

The sound generating portion 40 is constituted by a sound generator such as a well-known speaker and a controller which is not shown. The controller serves to operate the sound generator when the sense signal is supplied from the transmitting portion 22b of the regulator 22 in the control portion 20.

With the above structure, the switch 23 of the control portion 20 is changed over so that a vibration can be generated from the vibration generating portion 30, a sound can be generated from the sound generating portion 40 or both the vibration and the sound can be generated if the regulator 22 outputs the sense signal when a dog barks.

The control portion 20, the vibration generating portion 30 and the sound generating portion 40 may be provided on a substrate so as to be accommodated in the case 15.

Next, description will be given to the functions and advantages of the useless barking preventing collar 1 according to the present embodiment.

First of all, the collar C of the useless barking preventing collar 1 is attached to the neck of a dog.

Subsequently, the switch 23 is changed over to connect the sound generating portion 40 to the regulator 22. When the sound sensor 21 senses the bark of the dog, consequently, the regulator 22 transmits a sense signal and the sound generating portion 40 generates a sound upon receipt of the sense signal if the bark is equal to or greater than a reference volume.

When the sound is generated from the sound generating portion 40 even if the bark of the dog is small, it is possible to carry out such a regulation as to prevent the transmitting portion 22b from transmitting the sense signal to the sound generating portion 40 with a small bark by causing the regulating mechanism 22a to increase the reference volume of the regulator 22.

In other words, an owner can decide the loudness of the bark for transmitting the sense signal from the regulator 22 to the sound generating portion 40 depending on whether the sound is generated from the sound generating portion 40 and can thus regulate the reference volume of the regulator 22. Consequently, the sensitivity of the regulator 22 can be regulated easily.

When the regulation of the sensitivity of the regulator 22 is completed, the switch 23 is changed over to connect the control portion 20 to the motor 31 of the vibration generating portion 30. When the dog barks, consequently, the sound sensor 21 of the control potion 20 senses the bark. If the bark is greater than a reference volume which is set, the regulator 22 transmits a sense signal to the vibration generating portion 30.

By the vibration generating portion 30 receiving the sense signal, the main shaft of the motor 31 is rotated together with the rotating member 32.

The rotating member 32 has a center of gravity which is eccentric with respect to the main shaft of the motor 31. When the rotating member 32 is rotated, therefore, a force is applied in a radial direction to the main shaft of the motor 31 so that the main shaft of the motor 31 carries out a whirling motion. Consequently, the motor 31 is vibrated so that the vibration unit 10 is also vibrated.

Then, the collar C provided with the vibration unit 10 is also vibrated so that the vibration of the collar C is transmitted to the dog. As a result, it is possible to give an unpleasant feeling to the dog. Thus, it is possible to prevent the dog from barking.

As described above, according to the useless barking preventing collar 1 in accordance with the present embodiment, it is possible to produce an advantage that a dog can be prevented from barking.

### Industrial Applicability

With the useless barking preventing collar according to the present invention, the vibration of the collar is transmitted to the dog so that an unpleasant feeling can be given to the dog. Thus, it is possible to prevent the dog from barking. The useless barking preventing collar can be applied to another animal.

## Claims

1. A useless barking preventing collar to be attached to a neck of a dog, comprising:
a vibration unit constituted by a control portion, a vibration generating portion connected to the control portion and a sound generating portion connected to the control portion,
the control portion including:
a sound sensor for detecting a bark of the dog;
a regulator for outputting a sense signal when a volume of the bark detected by the sound sensor is equal to or greater than a reference volume; and
a switch provided between the regulator and the vibration generating portion and sound generating portion and serving to change over a transmitting destination for the sense signal output from the regulator between the vibration generating portion and the sound generating portion,
the vibration generating portion serving to vibrate the vibration unit when inputting the sense signal, and
the sound generating portion serving to generate a sound when inputting the sense signal.

2. The useless barking preventing collar according to claim 1, wherein the regulator has a regulating mechanism for regulating a reference volume for outputting a sense signal.
